# EUROPEAN PATENT APPLICATION

(11) **EP 4 714 912 A1**
(43) Date of publication of application: **25.03.2026**
(21) Application number: 23944493.8
(22) Date of filing: 07.12.2023
(51) Int. Cl.: C02F 1/469, B01D 61/42, C02F 1/00

(54) **WATER TREATMENT APPARATUS AND METHOD FOR CONTROLLING SAME**

(30) Priority: 03.07.2023 KR 20230086108; 14.08.2023 KR 20230106534
(71) Applicant: Samsung Electronics Co., Ltd., Suwon-si, Gyeonggi-do 16677 (KR)
(72) Inventor: KIM, Yumee, Suwon-si Gyeonggi-do 16677 (KR); HONG, Sungpil, Suwon-si Gyeonggi-do 16677 (KR); PARK, Heejin, Suwon-si Gyeonggi-do 16677 (KR); LIM, Changbae, Suwon-si Gyeonggi-do 16677 (KR); JUNG, Wonji, Suwon-si Gyeonggi-do 16677 (KR)
(74) Representative: Gulde & Partner
(86) International application number: PCT/KR2023/020079
(87) International publication number: WO 2025/009677

(57) **Abstract**

A water treatment apparatus is provided. The water treatment apparatus includes a housing, a plurality of electrode cells provided in the housing and including a plurality of first electrode cells connected in series, a power supply configured to supply power to the plurality of electrode cells to allow the plurality of electrode cells to adsorb ions contained in water in the housing, at least one variable resistor connected in parallel with at least one of the plurality of first electrode cells, and a controller configured to control the at least one variable resistor based on a voltage applied to each of the plurality of first electrode cells.

## Description

### [Technical Field]

The disclosure relates to a water treatment apparatus and a method for controlling the same. More particularly, the disclosure relates to a water treatment apparatus that uses electrodes to adsorb and remove ionic substances from water and a method for controlling the water treatment apparatus.

### [Background Art]

A capacitive deionization (CDI) processes, as an example of water treatment processes, is generally a process of removing ions from water flowing between two electrodes by applying an electric charge thereto by adsorbing the ions to the electrodes, and desorbing the ions adsorbed to the electrodes therefrom by inverting the electrode voltage.

In CDI technology, when a voltage is applied to two electrodes and ion-containing water flows between the two electrodes, cations are adsorbed on the cathode and anions are adsorbed on the anode, producing purified water. Once ions are adsorbed up to the capacity of the electrodes, further purification does not occur, and thus the electrodes require to be regenerated. By applying a reverse voltage to the saturated electrodes, ions are desorbed, allowing the electrodes to be reused. In this instance, contaminated water (discharge water) is produced.

For commercial use of CDI technology, such as home appliances like dishwashers, water softeners, water purifiers, and washing machines, stacking of single electrode pairs is required.

In existing technologies, stacked electrodes are connected in series and arranged between an inlet, where water flows in along the water channel direction, and an outlet, where water is discharged. As water flows, the electrodes near the inlet are contacted first. The electrodes near the outlet are exposed to water with lower hardness than the water treated near the inlet, which leads to reduced ion removal performance and a higher voltage drop compared to the electrodes near the inlet. Such phenomena cause electrode deterioration and lead to side effects, such as flow path blockage, increased water pressure, bubble generation, and organic fouling.

### [Disclosure]

### [Technical Problem]

An aspect of the disclosure provides a water treatment apparatus and a method for controlling the same that may reduce deterioration of ion removal performance and side effects by controlling a potential difference from electrodes near an inlet to electrodes near an outlet.

### [Technical Solution]

Technical aspects that can be achieved by the disclosure are not limited to the above-mentioned aspects, and other technical aspects not mentioned will be clearly understood by one of ordinary skill in the technical art to which the disclosure belongs from the following description.

In accordance with an aspect of the disclosure, a water treatment apparatus is provided. The water treatment apparatus includes a housing, a plurality of electrode cells provided in the housing and including a plurality of first electrode cells connected in series, a power supply configured to supply power to the plurality of electrode cells to allow the plurality of electrode cells to adsorb ions contained in water in the housing, at least one variable resistor connected in parallel with at least one of the plurality of first electrode cells, and a controller configured to control the at least one variable resistor based on a voltage applied to each of the plurality of first electrode cells.

In accordance with another aspect of the disclosure, a method for controlling a water treatment apparatus including a plurality of first electrode cells connected in series and provided in a housing and at least one variable resistor connected in parallel with at least one of the plurality of first electrode cells, and configured to supply power to the plurality of first electrode cells to allow the plurality of first electrode cells to adsorb ions contained in water in the housing is provided. The method includes controlling the at least one variable resistor based on a voltage applied to each of the plurality of first electrode cells.

### [Advantageous Effects]

According to the disclosure, a deterioration of ion removal performance and side effects are reduced by controlling variable resistors connected to a plurality of electrode cells.

According to the disclosure, a failure in a plurality of electrode cells is determined.

According to the disclosure, in the event of a failure in a plurality of electrode cells, the number of faulty electrode cells among the plurality of electrode cells is determined.

According to the disclosure, in the event of a failure in a plurality of electrode cells, the location of the faulty electrode cell or the location of the row to which the faulty electrode cell belongs is determined.

According to the disclosure, in the event of a failure in a plurality of electrode cells, the remaining electrode cells are protected from overcurrent.

According to the disclosure, continuous water purification operation is performed.

### [Description of Drawings]

FIG. 1 illustrates a schematic configuration of a capacitive deionization (CDI) apparatus according to an embodiment of the disclosure;
FIG. 2 illustrates electrodes of a unit electrode cell of a CDI apparatus according to an embodiment of the disclosure;
FIG. 3 illustrates a principle of adsorbing ions on electrodes in a CDI apparatus according to an embodiment of the disclosure;
FIG. 4 illustrates a principle of desorbing ions adsorbed on electrodes in a CDI apparatus according to an embodiment of the disclosure;
FIG. 5 is a control block diagram of an example of a CDI apparatus according to an embodiment of the disclosure;
FIG. 6 illustrates a power supply and variable resistors of a CDI apparatus according to an embodiment of the disclosure;
FIG. 7 is a flowchart illustrating a method for controlling a CDI apparatus according to an embodiment of the disclosure;
FIG. 8 illustrates an example of controlling variable resistors of each row to equalize a potential difference between a first row and a second row among electrode cells arranged in 2 rows × 3 columns in a CDI apparatus according to an embodiment of the disclosure;
FIG. 9 is a flowchart illustrating operations of determining a failure in an electrode cell in a CDI apparatus according to an embodiment of the disclosure;
FIG. 10 illustrates a relationship between a feedback voltage and the number of faulty electrode cells in a CDI apparatus according to an embodiment of the disclosure;
FIG. 11 illustrates a configuration of a CDI apparatus according to an embodiment of the disclosure;
FIG. 12 illustrates applying a forward voltage to a first electrode cell group and a reverse voltage to a second electrode cell group in a CDI apparatus according to an embodiment of the disclosure; and
FIG. 13 illustrates applying a reverse voltage to a first electrode cell group and a forward voltage to a second electrode cell group in a CDI apparatus according to an embodiment of the disclosure.

### [Modes of the Invention]

Various embodiments of the disclosure will be described with reference to the accompanying drawings. The various embodiments and the terms used herein are not intended to limit the technical features disclosed herein to specific embodiments, and should be understood to include various modifications, equivalents, and/or alternatives to the corresponding embodiments.

With regard to description of drawings, similar reference numerals may be used for similar or related components.

A singular form of a noun corresponding to an item may include one item or a plurality of the items unless context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

The term "and/or" includes any and all combinations of one or more of a plurality of associated listed items.

It will be understood that the terms "first", "second", etc., may be used only to distinguish one component from other components, not intended to limit the corresponding component in other aspects (e.g., importance or order).

It is said that one (e.g., first) component is "coupled" or "connected" to another (e.g., second) component, with or without the terms "functionally" or "communicatively". When referenced, it means that one component can be connected to another component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it can be directly on the other component or intervening components may also be present.

The water treatment apparatus according to the disclosure may be an apparatus that performs water treatment using any one or a combination of a capacitive deionization (CDI) process, a membrane capacitive deionization (MCDI) process, an electrodialysis (ED) process, an electrodeionization (EDI) process, and the like.

Hereinafter, the case where the water treatment apparatus is a CDI apparatus is described.

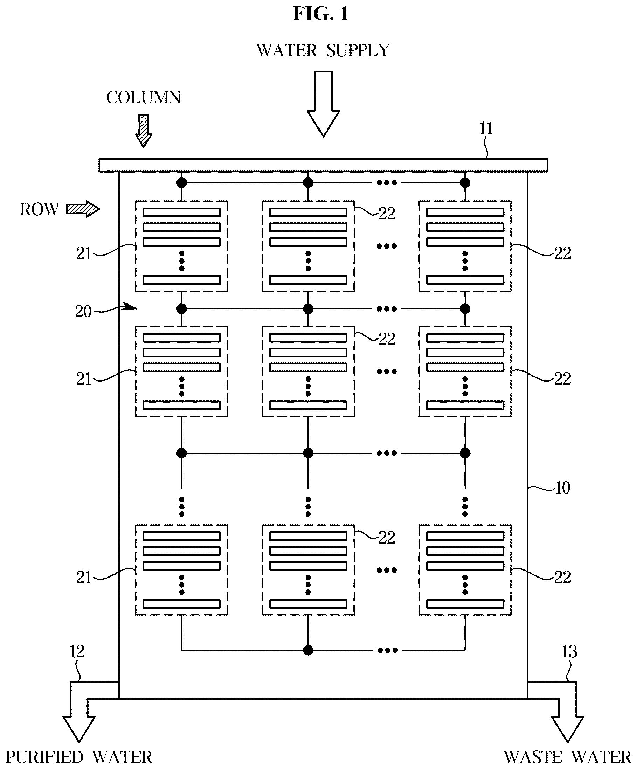

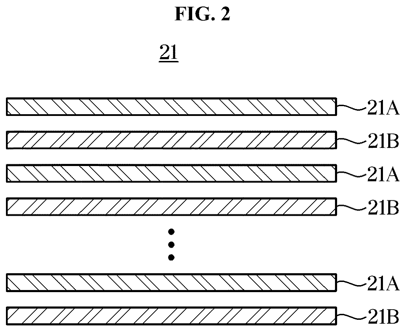

FIG. 1 illustrates a schematic configuration of a water treatment apparatus according to an embodiment of the disclosure. FIG. 2 illustrates electrodes of a unit electrode cell of a water treatment apparatus according to an embodiment of the disclosure.

Referring to FIGS. 1 and 2, a water treatment apparatus may include a housing 10. The housing 10 may be disposed in a space where fluid flows.

An inlet 11 and outlets 12 and 13 are formed in the housing 10. The inlet 11 may be provided to supply water, which is fluid introduced into the housing 10. The outlets 12 and 13 may be provided to discharge water in the housing 10 to the outside.

For example, the inlet 11 may be formed on an upper side of the housing 10, the first outlet 12 may be formed on a lower left side, and the second outlet 13 may be formed on a lower right side.

The first outlet 12 may be a purified water outlet that discharges purified water produced inside the housing 10. The second outlet 13 may be a wastewater outlet that discharges wastewater generated inside the housing 10.

A plurality of electrode cells 20 are provided in the housing 10.

The plurality of electrode cells 20 may include a plurality of first electrode cells 21 connected in series.

Meanwhile, the plurality of electrode cells 20 may include a plurality of second electrode cells 22 along with the plurality of first electrode cells 21. The plurality of second electrode cells 22 may each be connected in parallel with the plurality of first electrode cells 21, and connected in series with one another. There may be a plurality of second electrode cells 22.

The plurality of first electrode cells 21 and the plurality of second electrode cells 22 may be arranged in a direction in which water introduced into the housing 10 flows. In FIG. 1, because the flow direction of water is vertical, the plurality of first electrode cells 21 and the plurality of second electrode cells 22 may be arranged in the vertical direction. In addition, in a case where the flow direction of water is horizontal, the plurality of first electrode cells 21 and the plurality of second electrode cells 22 may be arranged in the horizontal direction. Meanwhile, in a case where the flow direction of water is diagonal, the plurality of first electrode cells 21 and the plurality of second electrode cells 22 may be arranged in the diagonal direction.

Depending on the voltage applied to each of the plurality of electrode cells 20, ions contained in the water may be adsorbed on the electrodes or ions adsorbed on the electrodes may be desorbed.

A unit electrode cell may be in a stacked form of electrodes. A form in which multiple electrodes are stacked in series is referred to as a cell, and for convenience, it is referred to as an electrode cell.

Hereinafter, a unit electrode cell is described based on any one of the plurality of first electrode cells 21.

Each unit electrode cell 21 may include a plurality of electrodes.

For example, the unit electrode cell 21 may be in a form where a single electrode pair 21A and 21B is stacked in series. Each stacked single electrode pair 21A and 21B may include a first electrode 21A and a second electrode 21B. In addition, the unit electrode cell 20 may include an electrode active material, an ion exchange resin, an ion exchange membrane, and/or a spacer.

The electrodes may be rectangular or square. The electrodes may be arranged parallel to each other and perpendicular to the direction of water flow. Water may flow between the electrodes.

In addition, the plurality of first electrode cells 21 formed by connecting the unit electrode cells may also be stacked in a multilayer structure. The plurality of second electrode cells 22 may also be stacked in a multilayer structure.

The plurality of electrode cells 20 may be arranged in M rows and N columns (M and N are natural numbers). The plurality of electrode cells 20 may be connected in series between rows and in parallel between columns. That is, the plurality of electrode cells 20 may be arranged in an M×N matrix form of unit electrode cells. The M rows may be connected in parallel and the N columns may be connected in series.

By arranging the plurality of electrode cells 20 in an M×N matrix form within the housing 10, the performance of the CDI apparatus may be enhanced while miniaturizing the CDI apparatus. Accordingly, the overall size of the product to which the CDI apparatus is applied may be reduced, and ease of installation may be improved when installed at home.

The components of the CDI apparatus are not limited to those illustrated. Various components may be provided in the water treatment apparatus in addition to the illustrated components.

The plurality of electrode cells 20 may be arranged along the direction of a water channel, through which the introduced water passes, in the housing 10. The electrodes installed inside the housing may be arranged along the direction in which the water channel passes. The water channel may be a path through which water introduced into the CDI apparatus flows to the outlet. The plurality of electrode cells 20 may be arranged along the water channel. Accordingly, water introduced through the inlet 11 may pass through the plurality of electrode cells 20, and then be discharged to the first outlet 12 or the second outlet 13. The first outlet 12 and the second outlet 13 may be selectively opened or closed by a valve.

When a first voltage is applied to the plurality of electrode cells 20, the plurality of electrode cells 20 may adsorb ions in the water to produce purified water. When the first voltage is applied to the plurality of electrode cells 20, ions in the water are adsorbed on the electrode surfaces, thereby purifying the water.

Meanwhile, when a second voltage is applied to the plurality of electrode cells 20, the plurality of electrode cells 20 may desorb the adsorbed ions to generate wastewater. When the second voltage is applied to the plurality of electrode cells 20, the ions adsorbed on the electrode surfaces are desorbed, the electrodes are regenerated, and the water may become contaminated.

As such, during the purification operation, the CDI apparatus may adsorb ions in the introduced water on the electrode surfaces to produce purified water from which ions have been removed. During the regeneration operation, the apparatus may desorb ions adsorbed on the electrode surfaces to regenerate the electrodes, and generate wastewater containing the desorbed ions. The purified water may be discharged to the outside through the first outlet 12. The wastewater may be discharged to the outside through the second outlet 13.

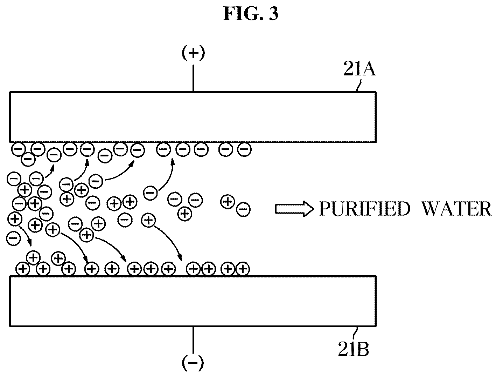

FIG. 3 illustrates a principle of adsorbing ions on electrodes in a CDI apparatus according to an embodiment of the disclosure.

Referring to FIG. 3, a first voltage may be applied to the first electrode 21A and the second electrode 21B. The first voltage may be referred to as an adsorption voltage. The first voltage may be a forward voltage. For example, due to the application of the first voltage, the first electrode 21A may become a positive electrode, and the second electrode 21B may become a negative electrode. In this case, while water moves between the first electrode 21A and second electrode 21B, spaced apart from each other, ionic substances contained in the water may move to the first electrode 21A and the second electrode 21B due to electrostatic attraction. Negatively charged ionic substances may be adsorbed on the first electrode 21A, and positively charged ionic substances may be adsorbed on the second electrode 21B. Accordingly, the water that has passed between the electrodes may contain no ionic substances or a very small amount of ionic substances.

However, in a case where a purification operation is continuously performed and ionic substances continue to accumulate on the first electrode 21A and the second electrode 21B, an electric field between the first electrode 21A and the second electrode 21B may weaken. When the electric field weakens, ionic substances are not easily adsorbed on the first electrode 21A and the second electrode 21B, thereby reducing the adsorption performance of the electrodes. To restore the adsorption performance of the electrodes, the electrodes require to be regenerated.

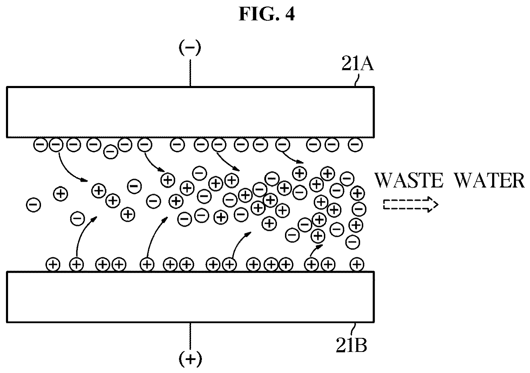

FIG. 4 illustrates a principle of desorbing ions adsorbed on electrodes in a CDI apparatus according to an embodiment of the disclosure.

Referring to FIG. 4, to restore an adsorption performance of electrodes, a second voltage having a polarity opposite to a first voltage may be applied to the first electrode 21A and the second electrode 21B. The second voltage may be referred to as a regeneration voltage. The second voltage may be a reverse voltage. Due to the application of the second voltage, the first electrode 21A may become a negative electrode, and the second electrode 21B may become a positive electrode. As the second voltage having an opposite polarity is applied to the first electrode 21A and the second electrode 21B, the ionic substances adsorbed on the first electrode 21A and the second electrode 21B may be desorbed from the first electrode 21A and the second electrode 21B.

In addition, even in a case where no voltage is applied to the first electrode 21A and the second electrode 21B, ionic substances may be desorbed from the first electrode 21A and the second electrode 21B. When an electric field disappears, an electrostatic attraction affecting the ionic substances disappears, and thus the ionic substances may be desorbed from the first electrode 21A and the second electrode 21B. The ionic substances desorbed from the first electrode 21A and the second electrode 21B may be discharged to the outside along with the water. As a result, the adsorption performance of the electrodes may be restored. Other electrode pairs may operate on the same principle.

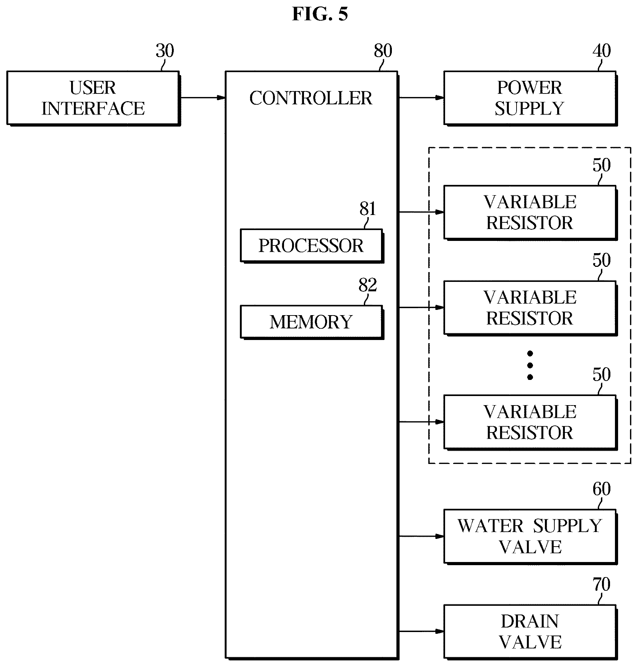

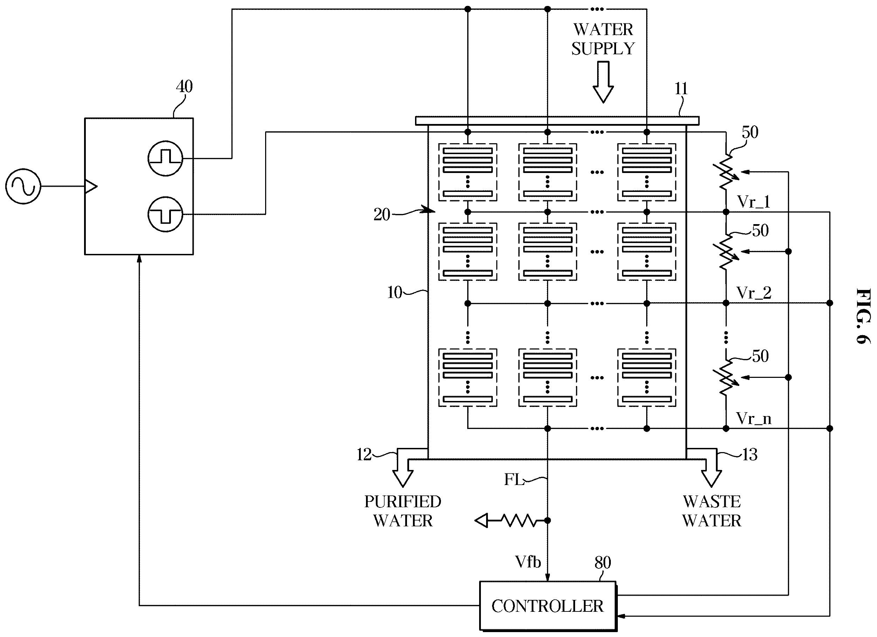

FIG. 5 is a control block diagram of an example of a CDI apparatus according to an embodiment of the disclosure, and FIG. 6 illustrates a power supply and variable resistors of a CDI apparatus according to an embodiment of the disclosure.

Referring to FIGS. 5 and 6, the CDI apparatus may include a user interface 30, a power supply 40, variable resistors 50, a water supply valve 60, a drain valve 70, and a controller 80.

The components of the CDI apparatus are not limited to those illustrated. Some of the illustrated components may be omitted, or other components may be added in addition to the illustrated components. For example, the CDI apparatus may further include a communication device for communicating with an external device.

The user interface 30 may include a display that displays information about a state and/or operation of the CDI apparatus or a product to which the CDI apparatus is applied. The user interface 30 may include an input interface that obtains user input. In addition, the user interface 30 may include a speaker that outputs sound.

The display of the user interface 30 may be provided as a liquid crystal display (LCD) panel, a light emitting diode (LED) panel, an organic light emitting diode (OLED) panel, or a micro LED panel. The display may be provided as a touch display.

The input interface may include various buttons for receiving user commands. For example, the input interface may include a purification button, a purification stop button, and/or a purified water volume adjustment button. A start command or a restart command for a purification operation may be input through the purification button. A stop command for the purification operation may be input through the purification stop button. The input interface may transmit electrical signals corresponding to user input to the controller 80.

The power supply 40 may be connected to an external power source, and may provide power required for the operation of the CDI apparatus. The power supply 40 may provide power to the electronic components included in the CDI apparatus. The power supply 40 may include a power circuit and a switching circuit, and may be electrically connected to the controller 80. The controller 80 may provide the power to the components of the CDI apparatus through the power supply 40.

The power supply 40 may supply a first voltage or a second voltage to the plurality of electrode cells 20. By applying the first voltage to the plurality of electrode cells 20, the plurality of electrode cells 20 may adsorb ions in the water to produce purified water. On the other hand, by applying the second voltage to the plurality of electrode cells 20, the plurality of electrode cells 20 may desorb the adsorbed ions to generate wastewater. The power supply 40 may be controlled by the controller 80 to provide the first voltage or the second voltage to the plurality of electrode cells 20.

The power supply 40 may include a switching-mode power supply (SMPS). The SMPS may convert alternating current (AC) power into direct current (DC) power, and may supply the DC power. The SMPS may perform two types of power supply where switching pulses operate in opposite directions. A first power supply may correspond to a forward direction, and a second power supply may correspond to a reverse direction. Through high-frequency switching via the SMPS, voltage may be maintained and current may be reduced, thereby reducing overall power consumption without performance deterioration.

The variable resistor 50 may adjust a resistance value. The variable resistor 50 may be controlled by the controller 80 to increase or decrease the resistance value. The controller 80 may adjust the resistance value of the variable resistor 50 as required.

The variable resistor 50 may be connected in parallel with at least one of the plurality of electrode cells 20. The controller 80 may detect the voltage applied to each of the plurality of electrode cells 20. The voltage applied to each of the plurality of electrode cells 20 may be the voltage distributed to each of the series-connected electrode cells from a power supply voltage. The voltage applied to each of the plurality of electrode cells 20 may include a potential of each electrode cell or a voltage across each electrode cell. For example, the controller 80 may detect the voltage applied to the electrode cell connected in parallel with the variable resistor 50 by reading the voltage across the variable resistor 50. The controller 80 may detect the voltage applied to the electrode cell through the variable resistor 50.

In a case where the plurality of electrode cells 20 are the plurality of first electrode cells 21, the variable resistor 50 may be connected in parallel with at least one of the plurality of first electrode cells 21. The controller 80 may detect the voltage applied to the first electrode cell to which the variable resistor 50 is connected.

In a case where the plurality of electrode cells 20 are arranged in an M×N matrix form with rows connected in series and columns connected in parallel, the variable resistor 50 may be connected in parallel with at least one row where the electrode cells are connected in parallel among the plurality of electrode cells 20. For example, the variable resistor 50 may be connected to one end in the row direction. The controller 80 may detect the voltage applied to the row to which the variable resistor 50 is connected. Accordingly, a potential difference between the rows may be detected. The resistance values of the variable resistors 50 may be set to be all the same as initial values. Meanwhile, the resistance values of the variable resistors 50 may be set to increase sequentially from the first row to the last row as initial values. In this case, as the variable resistor 50 increases, the combined resistance for the same row increases, which may cause a larger potential difference.

The water supply valve 60 may open or close the inlet 11 of the housing 10. By turning on the water supply valve 60, the inlet 11 may be opened. Raw water supplied from the water source may be introduced into the housing 10 through the inlet 11. By turning off the water supply valve 60, the inlet 11 may be closed. The raw water introduced into the housing 10 may be blocked. The water supply valve 60 may be turned on or off by the controller 80. The controller 80 may turn on the water supply valve 60 while a purification operation or regeneration operation of the CDI apparatus is performed.

The drain valve 70 may selectively open or close the first outlet 12 for discharging purified water or the second outlet 13 for discharging wastewater. By turning on the drain valve 70, the first outlet 12 may be opened and the second outlet 13 may be closed. The purified water in the housing 10 may be discharged to a purified water tank through the first outlet 12. By turning off the drain valve 70, the first outlet 12 may be closed and the second outlet 13 may be opened. The wastewater in the housing 10 may be discharged to a wastewater tank through the second outlet 13. The drain valve 70 may be turned on or off by the controller 80. The controller 80 may turn on the drain valve 70 during the purification operation and turn off the drain valve 70 during the regeneration operation.

The controller 80 may be electrically connected to the components of the CDI apparatus, and may control the operation of the CDI apparatus. The controller 80 may include a processor 81 and memory 82. The memory 82 may store various information required for the operation of the CDI apparatus. The memory 82 may store instructions, applications, data, and/or programs required for the operation of the CDI apparatus. The memory 82 may include volatile memory, such as static random access memory (S-RAM) or dynamic random access memory (DRAM) for temporarily storing data. In addition, the memory 82 may include non-volatile memory, such as read only memory (ROM), erasable programmable read only memory (EPROM), or electrically erasable programmable read only memory (EEPROM) for long-term data storage.

The processor 81 may generate control signals for controlling the operation of the CDI apparatus based on the instructions, applications, data, and/or programs stored in the memory 82. The processor 81, as hardware, may include logic circuits and arithmetic circuits. The processor 81 may process data according to the programs and/or instructions provided from the memory 82, and may generate control signals according to the processing results. The processor 81 and the memory 82 may be implemented as a single control circuit or as a plurality of circuits.

The controller 80 may apply a first voltage to the plurality of electrode cells 20 through the power supply 40 during the purification operation. When the first voltage is applied to the plurality of electrode cells 20, ions in the water within the housing 10 are adsorbed on the plurality of electrode cells 20. Accordingly, ions in the water may be removed, and purified water may be produced.

For example, when the purification operation starts, the controller 80 may turn on the water supply valve 60 to open the inlet 11, thereby introducing water from the water source into the housing 10. In this state, when the first voltage is applied to the plurality of electrode cells 20, the plurality of electrode cells 20 may adsorb ions in the water to remove ions from the water. The purified water, from which ions have been removed, may be discharged to the outside through the first outlet 12 opened by the drain valve 70.

The controller 80 may start a regeneration operation after the purification operation stops.

The controller 80 may apply a second voltage, having a polarity opposite to the first voltage, to the plurality of electrode cells 20 through the power supply 40 during the regeneration operation. When the second voltage is applied to the plurality of electrode cells 20, the ions adsorbed on the plurality of electrode cells 20 may be desorbed. Accordingly, the electrodes may be regenerated, and wastewater containing the desorbed ions may be generated.

For example, when the regeneration operation starts, the controller 80 may generate wastewater by applying the second voltage to the plurality of electrode cells 20 to desorb ions adsorbed on the plurality of electrode cells 20. In this instance, the controller 80 may turn off the drain valve 70 to close the first outlet 12 and open the second outlet 13, thereby discharging the wastewater in the housing 10 to the outside through the second outlet 13.

The controller 80 may adjust a resistance value of at least one variable resistor 50 to allow the voltage applied to each of the plurality of electrode cells 20 to be equal. The controller 80 may detect the voltages applied to the respective electrode cells connected in parallel with the variable resistors 50 by reading the voltages across the variable resistors 50 Vr_1, Vr_2,...Vr_n.

The controller 80 may adjust a resistance value of at least one variable resistor 50 to allow a voltage difference between the rows of the plurality of electrode cells 20 to be the same. The controller 80 may detect the voltages applied to the respective rows connected in parallel with the variable resistors 50 by reading the voltages across the variable resistors 50 Vr_1, Vr_2,...Vr_n.

The controller 80 may adjust a resistance value of at least one variable resistor 50 to allow the voltage applied to each of the plurality of electrode cells 20 to be equal during the purification operation. Meanwhile, the controller 80 may adjust a resistance value of at least one variable resistor 50 to allow the voltage applied to each of the plurality of electrode cells 20 to be equal during the regeneration operation.

In a case where a faulty electrode cell exists among the plurality of electrode cells 20, the controller 80 may monitor a change in feedback voltage fed back from the electrode cell to determine whether a failure has occurred in the plurality of electrode cells 20.

The controller 80 may determine whether a failure has occurred in the plurality of electrode cells 20 based on the voltages of one or more electrode cells among the plurality of electrode cells 20. The controller 80 may obtain a feedback voltage Vfb measured at one end of the last series-connected electrode cell. The controller 80 may determine whether a faulty electrode cell exists in the plurality of electrode cells 20 based on the feedback voltage Vfb.

The controller 80 may determine whether a failure has occurred in the plurality of electrode cells 20 based on the feedback voltage Vfb, i.e., the voltage at the end of the column of the plurality of electrode cells 20.

In a case where a failure has occurred in the plurality of electrode cells 20, the controller 80 may determine the number of faulty electrode cells based on the voltages of one or more electrode cells. For example, the controller 80 may determine the number of faulty electrode cells among the plurality of electrode cells 20, based on the feedback voltage Vfb measured at one end of the last series-connected electrode cell. The controller 80 may determine the number of faulty electrode cells among the plurality of electrode cells 20 based on the feedback voltage Vfb output on a feedback line FL connected to the last series-connected electrode cell.

In a case where a failure has occurred in the plurality of electrode cells 20, the controller 80 may determine the number of faulty electrode cells among the plurality of electrode cells 20 based on the feedback voltage Vfb output on the feedback line FL connected to the end of the column of the plurality of electrode cells 20.

In a case where a failure has occurred in the plurality of electrode cells 20, the controller 80 may determine the location of the faulty electrode cell by using a voltage difference between a voltage applied to the faulty electrode cell and a voltage applied to the normal electrode cell. In a case where a failure has occurred in the plurality of electrode cells 20, the controller 80 may determine the location of the faulty electrode cell by comparing the voltages of one or more electrode cells.

The controller 80 may determine the location of the row containing the faulty electrode cell by comparing the voltages of the rows of the plurality of electrode cells 20.

The controller 80 may reduce a resistance value of the variable resistor 50 connected in parallel with the faulty electrode cell. Overcurrent may flow in the row to which the faulty electrode cell belongs. Accordingly, by reducing the resistance value of the variable resistor 50 connected to the row to which the faulty electrode cell belongs, more current may flow to the variable resistor 50, thereby protecting the remaining electrode cells.

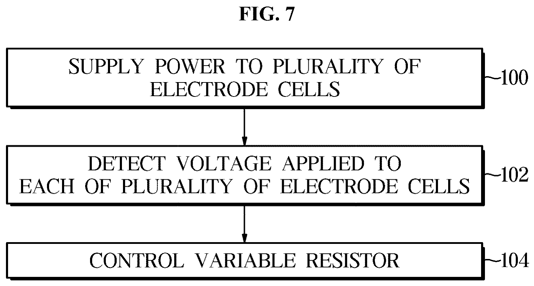

FIG. 7 is a flowchart illustrating a method for controlling a CDI apparatus according to an embodiment of the disclosure.

Referring to FIG. 7, the CDI apparatus may supply power to the plurality of electrode cells 20 in the housing 10 at operation 100. A first voltage may be supplied during a purification operation, and a second voltage may be supplied during a regeneration operation.

The controller 80 may apply the first voltage to the plurality of electrode cells 20 through the power supply 40 during the purification operation. When the first voltage is applied to the plurality of electrode cells 20, ions in the water within the housing 10 may be adsorbed on the plurality of electrode cells 20 to produce purified water. For example, when the purification operation starts, the controller 80 may turn on the water supply valve 60 to open the inlet 11, thereby introducing water from the water source into the housing 10. In this state, when the first voltage is applied to the plurality of electrode cells 20, the plurality of electrode cells 20 may adsorb ions in the water to remove ions from the water. The purified water, from which ions have been removed, may be discharged to the outside through the first outlet 12 opened by the drain valve 70.

The CDI apparatus may detect the voltage applied to each of the plurality of electrode cells 20 at operation 102.

The controller 80 may detect the voltages applied to the respective electrode cells connected in parallel with the variable resistors 50 by reading the voltages across the variable resistors 50 Vr_1, Vr_2,...Vr_n.

The CDI apparatus may control at least one variable resistor 50 based on the voltage applied to each of the plurality of first electrode cells at operation 104.

The controller 80 may adjust a resistance value of at least one variable resistor 50 to allow the voltage applied to each of the plurality of electrode cells 20 to be equal.

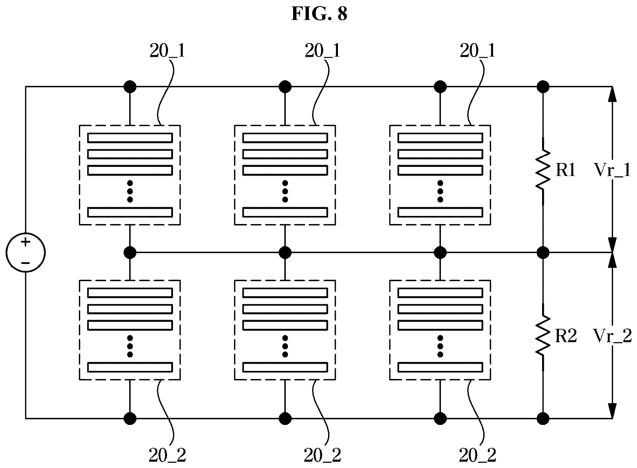

FIG. 8 illustrates an example of controlling variable resistors of each row to equalize a potential difference between the first row and the second row among electrode cells arranged in 2 rows × 3 columns in a CDI apparatus according to an embodiment of the disclosure.

Referring to FIG. 8, electrode cells arranged in two rows and three columns are shown.

Three electrode cells 20_1 are connected in parallel in the first row.

Three electrode cells 20_2 are connected in parallel in the second row.

The electrode cells 20_1 of the first row and the electrode cells 20_2 of the second row are connected in series.

A first variable resistor R1 is connected in parallel with the first row at one end of the first row.

A second variable resistor R2 is connected in parallel with the second row at one end of the second row.

For convenience of description, it is assumed that when a power supply voltage is 3V and resistance values of the first variable resistor R1 and the second variable resistor R2 are both 100Ω, the measured voltage Vr_1 across the first variable resistor R1 is 1.4V, and the measured voltage Vr_2 across the second variable resistor R2 is 1.6V.

It may be seen that the voltage Vr_2 across the second variable resistor R2 has a higher voltage value than the voltage Vr_1 across the first variable resistor R1, which indicates that a higher voltage is applied to the electrode cells 20_2 of the second row than to the electrode cells 20_1 of the first row.

The electrode cells 20_1 of the first row and the electrode cells 20_2 of the second row are sequentially arranged along the water channel direction between the inlet where water flows in and the outlet where water is discharged.

According to the flow direction of water, the electrode cells 20_1 of the first row near the inlet are contacted first. The electrode cells 20_2 of the second row near the outlet are exposed to water with relatively lower hardness than the water treated with the inlet. As a result, the electrode cells 20_2 of the second row have reduced ion removal performance and a higher voltage drop compared to the electrode cells 20_1 of the first row. In addition, as more water pressure is applied downwards in the water flow, side effects occur in the electrode cells 20_2 of the second row more than in the electrode cells 20_1 of the first row, leading to electrode deterioration and side effects such as flow path blockage, increased water pressure, bubble generation, and organic fouling.

Accordingly, by adjusting the resistance values of the first variable resistor R1 and the second variable resistor R2 so that the voltage applied to the electrode cells 20_1 of the first row and the voltage applied to the electrode cells 20_2 of the second row are the same, the deterioration of ion removal performance and side effects may be reduced. That is, by adjusting the resistance values of the first variable resistor R1 and the second variable resistor R2 connected to the end of each row so that all rows maintain the same potential difference, the deterioration of ion removal performance and side effects may be reduced.

By reducing the resistance value of the second variable resistor R2 from 100Ω to 10Ω, the voltage applied to both the electrode cells 20_1 of the first row and the electrode cells 20_2 of the second row may be made equal to 1.5V. That is, by changing the resistance value of the variable resistor, the potential difference between the rows may be made uniform.

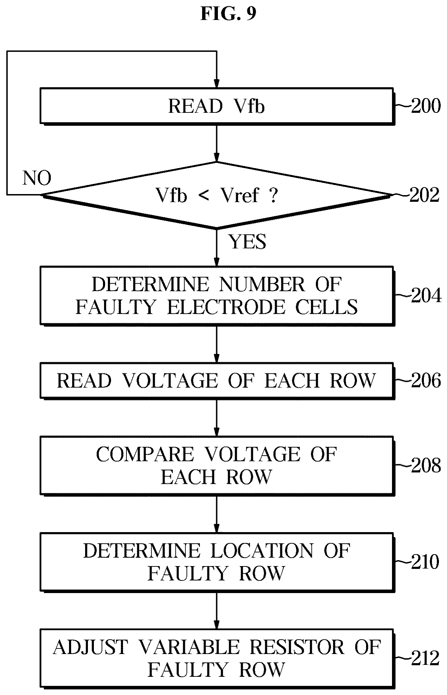

FIG. 9 is a flowchart illustrating operations of determining a failure in an electrode cell in a CDI apparatus according to an embodiment of the disclosure.

Referring to FIG. 9, the controller 80 reads the feedback voltage Vfb output on the feedback line FL connected to the end of the column of the plurality of electrode cells 20 during a purification operation at operation 200.

The controller 80 compares the feedback voltage Vfb with a preset voltage Vref to determine whether the feedback voltage Vfb is less than the preset voltage Vref at operation 202.

Based on the feedback voltage Vfb being less than the preset voltage Vref (Yes in operation 202), the controller 80 may determine that a failure has occurred in the plurality of electrode cells 20.

As such, the controller 80 may determine whether a failure has occurred in the plurality of electrode cells 20 by using the change in the feedback voltage output from the electrode cell, when a faulty electrode cell exists among the plurality of electrode cells 20.

Based on the feedback voltage Vfb being less than the preset voltage Vref (Yes in operation 202), the controller 80 may determine the number of faulty electrode cells among the plurality of electrode cells 20 based on the feedback voltage Vfb at operation 204.

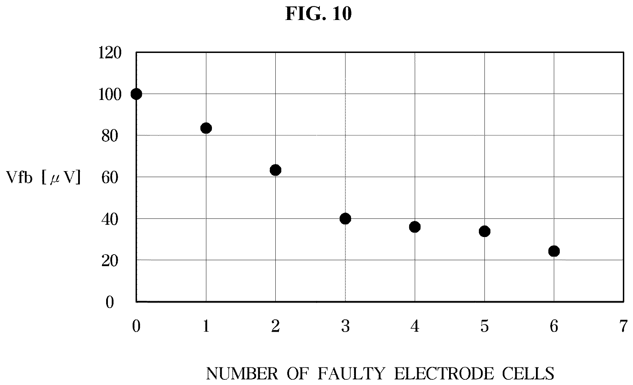

FIG. 10 illustrates a relationship between a feedback voltage and the number of faulty electrode cells in a CDI apparatus according to an embodiment of the disclosure.

Referring to FIG. 10, the vertical axis represents the feedback voltage Vfb, and the horizontal axis represents the number of faulty electrode cells.

For example, when the feedback voltage is 100µV, the number of faulty electrode cells is 0, but when the feedback voltage is 40µV, the number of faulty electrode cells is 3, and when the feedback voltage is 22µV, the number of faulty electrode cells is 6.

As such, it may be seen that as the feedback voltage decreases, the number of faulty electrode cells increases. Accordingly, by storing the number of faulty electrode cells corresponding to the feedback voltage as a mapping table, the number of faulty electrode cells may be determined based on the feedback voltage.

In a case where a failure has occurred in the plurality of electrode cells 20, the controller 80 may determine a location of a faulty electrode cell by using a voltage difference between a voltage applied to the faulty electrode cell and a voltage applied to the normal electrode cell.

Referring back to FIG. 9, the controller 80 reads the voltage of each row at operation 206.

The controller 80 may detect the voltages applied to the respective rows connected in parallel with the variable resistors 50 by reading the voltages across the variable resistors 50 Vr_1, Vr_2,...Vr_n.

The controller 80 may compare the voltage of each row at operation 208.

The controller 80 may determine the location of the faulty row containing the faulty electrode cell based on the voltage difference of each row at operation 210. For example, a row that generates a voltage difference greater than an average voltage difference of each row may be determined as a faulty row. As another example, a row that generates a voltage difference greater than a reference voltage difference of each row may be determined as a faulty row. A method of determining a faulty row is not limited to the above examples. Various other methods may be used. As such, in the event of an electrode cell failure during the purification operation, the circuit for the faulty electrode cell opens, and overcurrent flows to other electrode cells in the same row. To prevent the above, by continuously determining the presence of a faulty electrode cell through the feedback voltage at one end of row, a failure in an electrode cell may be detected, and the location of the row to which the faulty electrode cell belongs may be found by comparing the potential differences of each row.

The controller 80 may adjust a resistance value of the variable resistor 50 connected to the row to which the faulty electrode cell belongs at operation 212. Because overcurrent may flow in the row to which the faulty electrode cell belongs, the controller 80 may reduce the resistance value of the variable resistor 50 connected to the row to which the faulty electrode cell belongs. Accordingly, more current may flow to the variable resistor 50 side, thereby protecting the remaining electrode cells. In addition, even in a case where a small number of electrode cells fail, the electrode cells may be continuously used without replacement or repair.

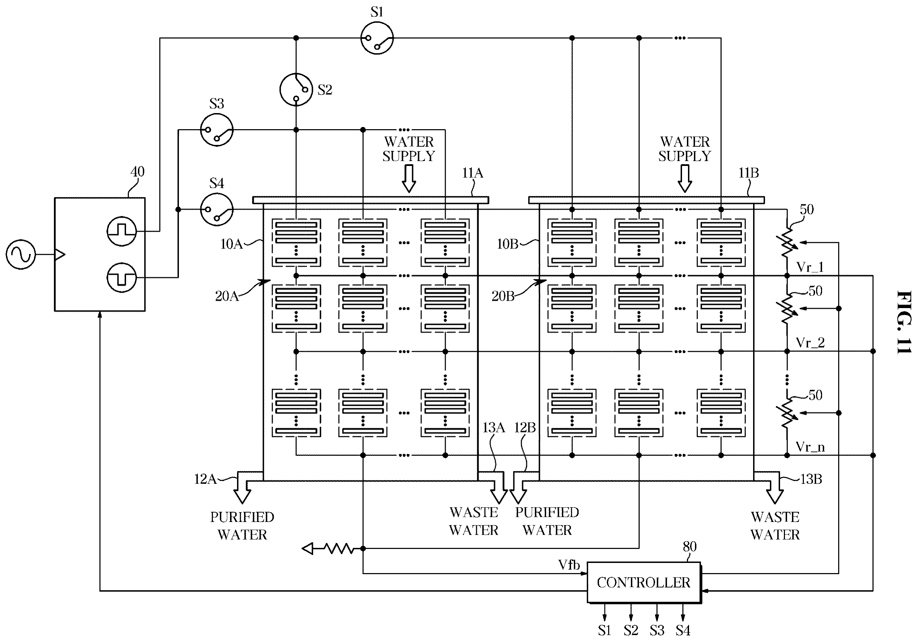

FIG. 11 illustrates a configuration of a CDI apparatus according to an embodiment of the disclosure.

Referring to FIG. 11, the housing 10 may include a first housing 10A and a second housing 10B separated from each other.

The plurality of electrode cells 20 may include a first electrode cell group 20A provided in the first housing 10A, and a second electrode cell group 20B provided in the second housing 10B.

The power supply 40 may include four switches S1, S2, S3 and, S4 that are switched to selectively supply a forward voltage and a reverse voltage to the first electrode cell group or the second electrode cell group, respectively.

The controller 80 may control the power supply 40 to selectively supply a forward voltage and a reverse voltage to the first electrode cell group or the second electrode cell group, respectively.

The first electrode cell group 20A provided in the first housing 10A and the second electrode cell group 20B may alternately perform purification operations, enabling continuous purification.

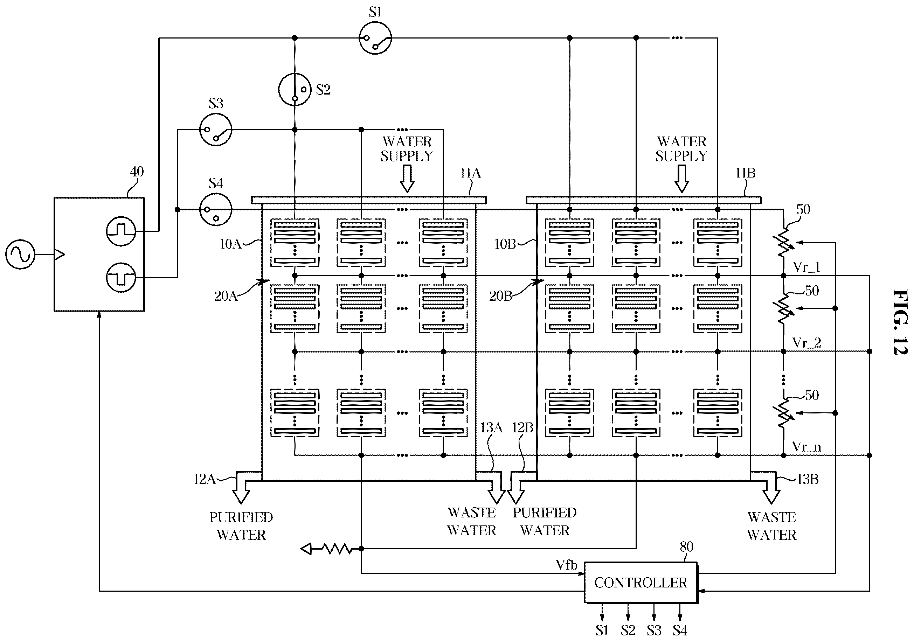

FIG. 12 illustrates applying a forward voltage to a first electrode cell group and a reverse voltage to a second electrode cell group in a CDI apparatus according to an embodiment of the disclosure.

Referring to FIG. 12, in a case where a first switch S1 and a third switch S3 are off, and a second switch S2 and a fourth switch S4 are on, a forward voltage is supplied to the first electrode cell group 20A provided in the first housing 10A, and a reverse voltage is applied to the second electrode cell group 20B provided in the second housing 10B.

Accordingly, the first electrode cell group 20A provided in the first housing 10A may perform a purification operation to produce purified water. The second electrode cell group 20B provided in the second housing 10B may perform a regeneration operation to regenerate the electrodes and generate wastewater.

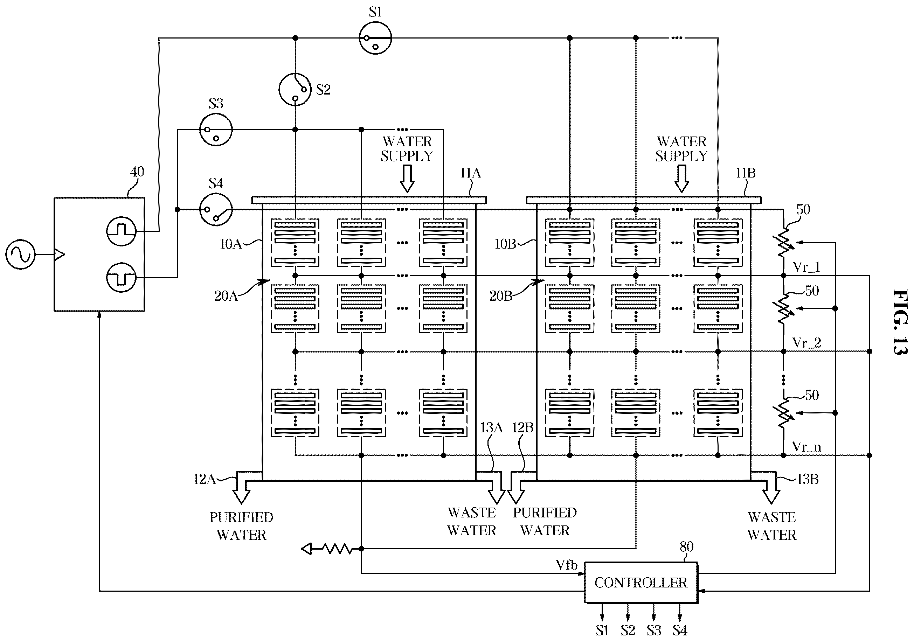

FIG. 13 illustrates applying a reverse voltage to a first electrode cell group and a forward voltage to a second electrode cell group in a CDI apparatus according to an embodiment of the disclosure.

Referring to FIG. 13, in a case where the first switch S1 and the third switch S3 are on, and the second switch S2 and the fourth switch S4 are off, a reverse voltage is supplied to the first electrode cell group 20A provided in the first housing 10A, and a forward voltage is applied to the second electrode cell group 20B provided in the second housing 10B.

Accordingly, the first electrode cell group 20A provided in the first housing 10A may perform a regeneration operation to regenerate the electrodes and generate wastewater. The second electrode cell group 20B provided in the second housing 10B may perform a purification operation to produce purified water.

Continuous purification may be performed by alternately supplying the forward voltage to the first electrode cell group 20A or the second electrode cell group 20B.

As such, while the first electrode cell group 20A provided in the first housing 10A performs the purification operation, the second electrode cell group 20B may perform the regeneration operation, enabling continuous production of purified water. Accordingly, the purification efficiency of the CDI apparatus may be improved. In addition, through high-frequency switching via the SMPS, voltage may be maintained and current may be reduced, thereby reducing overall power consumption without performance deterioration.

According to the disclosure, a deterioration of ion removal performance and side effects may be reduced by controlling variable resistors connected to a plurality of electrode cells.

According to the disclosure, a failure in a plurality of electrode cells may be determined.

According to the disclosure, in the event of a failure in a plurality of electrode cells, the number of faulty electrode cells among the plurality of electrode cells may be determined.

According to the disclosure, in the event of a failure in a plurality of electrode cells, the location of the faulty electrode cell or the location of the row to which the faulty electrode cell belongs may be determined.

According to the disclosure, in the event of a failure in a plurality of electrode cells, the remaining electrode cells may be protected from overcurrent.

According to the disclosure, continuous water purification operation may be performed.

According to an embodiment of the disclosure, a water treatment apparatus may include: a housing; a plurality of electrode cells provided in the housing and including a plurality of first electrode cells connected in series; a power supply configured to supply power to the plurality of electrode cells to allow the plurality of electrode cells to adsorb ions contained in water in the housing; at least one variable resistor connected in parallel with at least one of the plurality of first electrode cells; and a controller configured to control the at least one variable resistor based on a voltage applied to each of the plurality of first electrode cells.

The controller may be configured to adjust a resistance value of the at least one variable resistor to allow the voltage applied to each of the plurality of first electrode cells to be equal.

The controller may be configured to determine a failure in the plurality of first electrode cells based on a feedback voltage that is output on a feedback line connected to one or more first electrode cells of the plurality of first electrode cells.

The controller may be configured to determine a number of faulty first electrode cells based on the feedback voltage.

The controller may be configured to determine a location of a faulty first electrode cell by comparing voltages applied to the one or more first electrode cells.

The controller may be configured to reduce a resistance value of a variable resistor connected in parallel with the faulty first electrode cell.

The plurality of electrode cells may further include a plurality of second electrode cells, which are each connected in parallel with the plurality of first electrode cells.

The plurality of first electrode cells and the plurality of second electrode cells may be arranged in a direction of a flow of water introduced into the housing.

The plurality of electrode cells may be arranged in M rows and N columns (where M and N are natural numbers).

The controller may be configured to adjust a resistance value of the at least one variable resistor to allow a voltage difference between rows of the plurality of electrode cells to be equal.

The controller may be configured to determine at least one of a failure in the plurality of electrode cells or a number of faulty electrode cells, based on a feedback voltage that is output on a feedback line connected to one end in a column direction of the plurality of electrode cells.

The controller may be configured to determine a location of a row containing a faulty electrode cell by comparing voltages between rows of the plurality of electrode cells.

The controller may be configured to reduce a resistance value of a variable resistor connected in parallel with the row containing the faulty electrode cell.

The housing may include a first housing and a second housing separated from each other, the plurality of first electrode cells may include a first electrode cell group provided within the first housing and a second electrode cell group provided within the second housing, and the controller may be further configured to control the power supply to selectively supply a forward voltage and a reverse voltage to the first electrode cell group or the second electrode cell group, respectively.

According to an embodiment of the disclosure, in a method for controlling a water treatment apparatus including a plurality of first electrode cells connected in series and provided in a housing and at least one variable resistor connected in parallel with at least one of the plurality of first electrode cells, and configured to supply power to the plurality of first electrode cells to allow the plurality of first electrode cells to adsorb ions contained in water in the housing, the method may include controlling the at least one variable resistor based on a voltage applied to each of the plurality of first electrode cells.

The controlling of the at least one variable resistor may include adjusting a resistance value of the at least one variable resistor to allow the voltage applied to each of the plurality of first electrode cells to be equal.

The method may further include determining at least one of a failure in the plurality of first electrode cells or a number of faulty first electrode cells based on a feedback voltage that is output on a feedback line connected to one or more first electrode cells of the plurality of first electrode cells.

The determining of a failure in the plurality of first electrode cells may include determining a location of a faulty first electrode cell by comparing voltages applied to the one or more first electrode cells.

The voltage applied to each of the plurality of first electrode cells may be changed depending on a hardness of the water introduced into the plurality of first electrode cells.

The housing may include a first housing and a second housing separated from each other, the plurality of first electrode cells may include a first electrode cell group provided within the first housing and a second electrode cell group provided within the second housing, and the method may further include selectively supplying a forward voltage and a reverse voltage to the first electrode cell group or the second electrode cell group, respectively.

Meanwhile, the disclosed embodiments may be implemented in the form of a recording medium that stores instructions executable by a computer. The instructions may be stored in the form of program codes, and when executed by a processor, the instructions may generate a program module to perform the operations of the disclosed embodiments.

The machine-readable storage medium may be provided in the form of a non-transitory storage medium. When a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

The method according to various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A water treatment apparatus, comprising:
a housing;
a plurality of electrode cells provided in the housing and comprising a plurality of first electrode cells connected in series;
a power supply configured to supply power to the plurality of electrode cells to allow the plurality of electrode cells to adsorb ions contained in water in the housing;
at least one variable resistor connected in parallel with at least one of the plurality of first electrode cells; and
a controller configured to control the at least one variable resistor based on a voltage applied to each of the plurality of first electrode cells.

2. The water treatment apparatus of claim 1, wherein the controller is further configured to adjust a resistance value of the at least one variable resistor to allow the voltage applied to each of the plurality of first electrode cells to be equal.

3. The water treatment apparatus of claim 1, wherein the controller is configured to determine a failure in the plurality of first electrode cells based on a feedback voltage that is output on a feedback line connected to one or more first electrode cells of the plurality of first electrode cells.

4. The water treatment apparatus of claim 3, wherein the controller is further configured to determine a number of faulty first electrode cells based on the feedback voltage.

5. The water treatment apparatus of claim 3, wherein the controller is configured to determine a location of a faulty first electrode cell by comparing voltages applied to the one or more first electrode cells.

6. The water treatment apparatus of claim 5, wherein the controller is further configured to reduce a resistance value of a variable resistor connected in parallel with the faulty first electrode cell.

7. The water treatment apparatus of claim 1, wherein the plurality of electrode cells further comprises a plurality of second electrode cells, which are each connected in parallel with the plurality of first electrode cells and connected in series with one another.

8. The water treatment apparatus of claim 7, wherein the plurality of first electrode cells and the plurality of second electrode cells are arranged in a direction of a flow of water introduced into the housing.

9. The water treatment apparatus of claim 7, wherein the plurality of electrode cells are arranged in M rows and N columns (where M and N are natural numbers).

10. The water treatment apparatus of claim 9, wherein the controller is further configured to adjust a resistance value of the at least one variable resistor to allow a voltage difference between rows of the plurality of electrode cells to be equal.

11. The water treatment apparatus of claim 9, wherein the controller is further configured to determine at least one of a failure in the plurality of electrode cells or a number of faulty electrode cells, based on a feedback voltage that is output on a feedback line connected to one end in a column direction of the plurality of electrode cells.

12. The water treatment apparatus of claim 11, wherein the controller is further configured to determine a location of a row containing a faulty electrode cell by comparing voltages between rows of the plurality of electrode cells.

13. The water treatment apparatus of claim 12, wherein the controller is further configured to reduce a resistance value of a variable resistor connected in parallel with the row containing the faulty electrode cell.

14. The water treatment apparatus of claim 1,
wherein the housing includes a first housing and a second housing separated from each other,
wherein the plurality of first electrode cells includes a first electrode cell group provided within the first housing and a second electrode cell group provided within the second housing, and
wherein the controller is further configured to control the power supply to selectively supply a forward voltage and a reverse voltage to the first electrode cell group or the second electrode cell group, respectively.

15. The water treatment apparatus of claim 2, wherein the voltage applied to each of the plurality of first electrode cells changes depending on a hardness of the water introduced into the plurality of first electrode cells.
